# FASCICULE DE BREVET EUROPEEN

(11) **EP 3 083 404 B1**
(45) Date de publication et mention de la délivrance du brevet: **06.02.2019**
(21) Numéro de dépôt: 14821807.6
(22) Date de dépôt: 08.12.2014
(51) Int. Cl.: B64D 41/00

(54) **SUSPENSION D'UN ÉLÉMENT TUBULAIRE DANS UN COMPARTIMENT D'AÉRONEF**
AUFHÄNGUNG EINES ROHRFÖRMIGEN TEILS IN EINEM LUFTFAHRZEUGBEREICH
SUSPENSION OF A TUBULAR ELEMENT IN AN AIR CRAFT COMPARTMENT

(30) Priorité: 16.12.2013 FR 1362729
(43) Date de publication de la demande: 26.10.2016
(73) Titulaire: Safran Power Units, 31200 Toulouse (FR)
(72) Inventeur: CAZENAVE, Olivier, F-31820 Pibrac (FR); BARNETO, Xavier, F-31300 Toulouse (FR); LALANNE, Clément, F-77550 MOISSY-CRAMAYEL (FR)
(74) Mandataire: Gevers & Orès
(86) Numéro de dépôt international: PCT/FR2014/053212
(87) Numéro de publication internationale: WO 2015/092207

(56) Documents cités:
- US-A1- 2006 060 417
- US-A1- 2011 049 291
- US-A1- 2011 259 998
- US-A1- 2012 291 450
- US-B1- 6 328 293

## Description

### Domaine de l'invention :

La présente invention se rapporte au domaine de la suspension de moteurs, notamment dans un aéronef. Elle vise plus particulièrement le positionnement précis à l'intérieur de l'aéronef du moteur par rapport à des équipements devant coopérer avec ce moteur pour en assurer un fonctionnement correct.

### Etat de la technique :

L'invention concerne notamment un groupe auxiliaire de puissance, appelé ici GAP (aussi appelé APU dans la profession, en référence à la terminologie Anglo-Saxonne : « Auxiliary Power Unit »). Un GAP peut fournir de la puissance aux équipements (alternateurs, pompes, compresseurs de charge, conditionnement d'air) de l'aéronef, directement et/ou indirectement via une boîte de transfert de puissance, notamment pendant les régimes de vol transitoires.

Comme tout turbomoteur, un GAP comporte classiquement un ensemble compresseur/chambre de combustion/turbine formant un générateur de gaz. De l'air frais est introduit dans le compresseur puis l'air comprimé, mélangé au carburant, provoque la combustion dans la chambre dédiée. Les gaz chauds ont détendus dans la turbine qui transmet partiellement la puissance mécanique produite au compresseur via un arbre de transmission, la puissance résiduelle étant dirigée via une boîte de transfert de puissance vers les équipements. Dans un autre type d'architecture, la puissance cinétique des gaz d'échappement peut entraîner également une turbine libre qui, à son tour, transmet de la puissance, via un arbre, aux équipements (alternateurs, pompes, compresseur de charge, etc.). Les gaz résiduels sont évacués par une tuyère d'échappement.

Le GAP forme en général un module qui intègre le turbomoteur avec divers accessoires, tels une boîte de transfert de puissance et un système de lubrification, et qui est installé dans un compartiment dédié. Sur les avions civils, par exemple, le groupe auxiliaire de puissance est traditionnellement monté à l'intérieur du cône de queue et fixé en amont sur une cloison du fuselage participant au maintien structural de l'avion.

L'installation du GAP dans son compartiment comporte, en particulier, un conduit ayant pour première fonction de permettre l'échappement des gaz du turbomoteur à l'extérieur de l'aéronef. La présence de ce conduit peut, par ailleurs, être utilisée pour assurer la ventilation et le refroidissement du GAP et de ses accessoires, comme cela est expliqué dans la demande FR2969123.

A cet effet, l'embouchure du conduit d'échappement a une forme évasée propre à accueillir la tuyère de sortie du turbomoteur en ménageant un interstice entre les deux. Cet interstice permet d'aspirer l'air du compartiment par effet Venturi et, ainsi, de créer une circulation d'air secondaire refroidissant le compartiment du GAP et notamment ses équipements et ses parties externes. Il est important de maintenir la forme de cet interstice entre la sortie du turbomoteur et le conduit d'échappement pour assurer le refroidissement. La position du conduit d'échappement est donc généralement ajustée par rapport au GAP.

Généralement, aussi, la tuyère d'échappement du turbomoteur se trouve à l'arrière du GAP et le conduit d'échappement guide les gaz vers un orifice dans la paroi du cône de queue située encore un peu plus en arrière. Cette disposition conduit à devoir positionner le GAP, le conduit et la paroi du cône de queue en des points qui se répartissent le long la direction d'allongement du cône de queue, suivant l'axe du fuselage.

Par ailleurs, le dispositif de suspension du GAP dans le cône de queue, par exemple, comporte en général quatre liens fixant le GAP sur son avant à la cloison du fuselage, deux fixant le GAP sur la structure du cône de queue. Il laisse ainsi l'arrière du GAP, avec la sortie de tuyère, dégagé pour adapter l'échappement dans un espace généralement réduit à ce niveau du compartiment.

Dans cette configuration, la cloison à l'avant du cône de queue fixant une référence, les tolérances de fabrication des divers éléments peuvent entraîner des écarts importants de position relative entre la tuyère du GAP et l'embouchure de l'échappement et/ou entre l'extrémité arrière du conduit et l'orifice du cône de queue dans lequel il doit déboucher. Ces écarts peuvent être le fait des dispositifs de maintien du GAP. Cependant, ils peuvent également être dus à la structure du cône de queue, dont un léger gauchissement, par exemple, peut déplacer significativement la position de l'orifice alors que le GAP est correctement aligné par rapport à l'axe du fuselage.

Fabriquer des pièces avec une précision suffisante pour aligner l'ensemble des éléments s'avère complexe et coûteux.

Une solution existante, qui consiste à fixer la partie amont du conduit dans le cône de queue par des plaques dans lesquelles sont agencées des fentes permettant d'adapter la position de leur boulonnage sur la structure, s'avère peu satisfaisante. D'une part elle ne permet pas toujours d'aligner l'embouchure du conduit avec la sortie de la tuyère sans que l'autre extrémité du conduit n'appuie sur les bords de l'orifice dans le cône de queue dans lequel il doit déboucher. Ce genre de situation crée des contraintes sur l'ensemble qui peuvent entraîner une usure prématurée des différents éléments, notamment du joint pare-feu qui est installé à l'orifice. D'autre part ces plaques alourdissent l'ensemble.

Le document US 2006/0060417 A1 divulgue une installation selon le préambule de la revendication 1.

Le problème que l'on vient d'exposer peut se retrouver dans d'autres situations. L'objectif de l'invention est d'apporter une solution pour aligner correctement l'ensemble d'un module moteur, en particulier un GAP, d'un module accessoire et d'une partie de la structure du compartiment qui les contient, sans nécessiter une précision excessive de leur fabrication. Un second objectif de l'invention est de permettre un gain de poids en simplifiant le dispositif de fixation du GAP et de ses accessoires tout en diminuant les contraintes sur la partie de structure les contenant.

### Exposé de l'invention :

L'invention concerne une installation selon la revendication 1 comportant en outre un ensemble comprenant une structure et un élément tubulaire monté de manière isostatique dans la structure, ledit élément tubulaire comportant une première extrémité reliée par au moins quatre bielles à ladite structure, fixant quatre premiers degrés de liberté, et une deuxième extrémité reliée à ladite structure par un moyen de liaison fixant deux seconds degrés de liberté, lesdites bielles comportant un moyen de réglage de leur longueur.

Les bielles peuvent comporter un double filetage configuré pour translater ses extrémités dans des sens opposés, ce qui permet de régler la longueur de la bielle au moment de l'installer pour relier l'élément tubulaire à la structure, l'élément tubulaire étant maintenu temporairement par ailleurs à la bonne position.

Le fait d'utiliser des bielles reliées à la première extrémité de l'élément tubulaire permet de positionner facilement et précisément cette extrémité. En particulier, cet élément tubulaire peut être le conduit d'échappement du turbomoteur. Lorsque l'embouchure du conduit doit s'adapter autour de la sortie de la tuyère du turbomoteur, avec des tolérances précises, il est possible de régler les quatre bielles une fois l'embouchure du conduit positionnée correctement. Par ailleurs, le fait que le montage soit isostatique permet d'utiliser les deux degrés de liberté libres pour positionner l'autre extrémité du conduit d'échappement par rapport à la structure. Il est en effet avantageux de placer les moyens de liaison correspondant aux deux derniers degrés de liberté au niveau de l'endroit correspondant à la deuxième contrainte en positionnement que doit respecter l'élément tubulaire.

En particulier, lorsqu'il s'agit de placer le module GAP et le conduit d'échappement dans le compartiment en assurant l'effet Venturi à l'interface entre la tuyère du GAP et l'embouchure du conduit, ce dispositif permet de rattraper un défaut d'alignement entre le GAP et la structure sans intervenir sur la suspension du GAP. Le conduit d'échappement peut être placé à la fois devant la tuyère par les quatre bielles et s'adapter à l'orifice de la paroi par les liaisons à son extrémité arrière.

De plus, le montage par bielles est plus léger que celui utilisant des ferrures réglables entre le conduit d'échappement et la paroi du compartiment du GAP.

La structure peut comporter, en particulier, une paroi avec un orifice, la deuxième extrémité de l'élément tubulaire étant alors montée coulissante dans cet orifice.

Cela correspond à l'un des degrés de liberté restants. Avantageusement le montage de cette extrémité de l'élément tubulaire permet également d'assurer une liaison rotule avec l'orifice de la paroi. Ce montage est notamment adapté au cas de l'échappement d'un GAP. Fonctionnellement, le conduit doit permettre l'évacuation des gaz hors du compartiment et ne pas forcer sur la paroi. Il est donc important que le conduit soit centré sur l'orifice, par le biais d'une interface assurant une pression radiale, et permettant de conserver une liaison type rotule, et également de conserver la translation suivant l'axe de l'orifice Le conduit peu donc légèrement coulisser ou tourner par rapport à l'orifice,.

De préférence, le montage coulissant entre l'orifice de la paroi et la deuxième extrémité de l'élément tubulaire est flexible suivant au moins un des deux degrés de liberté qu'il commande. Cela permet de d'accepter, au niveau de la liaison entre l'élément tubulaire et l'orifice de la paroi, de légers écarts par rapport aux deux degrés de liberté théoriquement bloqués par la liaison. C'est par exemple le cas lorsque l'élément tubulaire se dilate sous l'effet des gaz chaud d'échappement, ou lorsque des charges liées à l'opération de l'avion s'appliquent sur l'élément tubulaire et produisent un léger déplacement.

L'invention concerne également un aéronef comprenant une installation telle que décrite précédemment et un groupe auxiliaire de puissance, la paroi de la structure formant au moins une partie de la paroi du compartiment contenant le groupe auxiliaire de puissance et l'élément tubulaire étant un conduit dont l'entrée est positionnée pour recueillir les gaz d'échappement sortant de la tuyère. Le premier dispositif de fixation dudit conduit est configuré de telle sorte que la sortie de la tuyère du GAP s'emboîte dans la première extrémité du conduit en laissant un jeu avec ledit conduit sur l'ensemble de sa périphérie. Ladite structure comportant la paroi et l'orifice peut former le cône de queue

L'installation selon l'invention comprend un ensemble tel que décrit précédemment et un module moteur comportant une tuyère d'échappement de gaz, l'élément tubulaire étant un conduit dont l'entrée est positionnée pour recueillir les gaz d'échappement sortant de la tuyère. La sortie de la tuyère s'emboîte dans la première extrémité du conduit en laissant un jeu avec ledit conduit sur l'ensemble de sa périphérie.

En particulier, le module moteur comporte un groupe auxiliaire de puissance, la paroi de la structure formant au moins une partie de la paroi du compartiment contenant le groupe auxiliaire de puissance. C'est notamment le cas pour un aéronef dans lequel ladite structure forme le cône de queue.

L'invention concerne aussi un procédé de montage selon la revendication 6.

### Brève description des figures :

La présente invention sera mieux comprise et d'autres détails, caractéristiques et avantages de la présente invention apparaîtront plus clairement à la lecture de la description qui suit, en référence aux dessins annexés sur lesquels :
La figure 1 présente, vu de dessus, un schéma d'une installation réalisation selon l'invention pour une situation nominale.
La figure 2 présente, vu de dessus, un schéma d'une installation réalisation selon l'invention pour une situation différente de celle de la figure 1.
La figure 3 présente vue en perspective de l'avant, un élément tubulaire fixé dans la structure selon l'invention.
La figure 4 présente une bielle réglable réalisant un aspect de l'invention.
La figure 5 présente une vue en perspective de la liaison entre l'extrémité arrière de l'élément tubulaire et la structure, selon un autre aspect de l'invention.

### Description détaillée de l'invention :

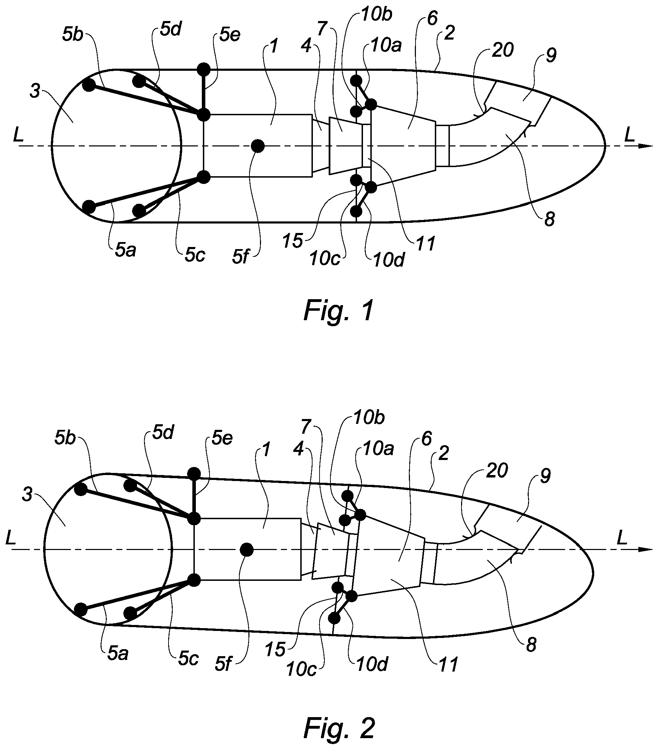

En référence aux figures 1 et 2, l'invention concerne, par exemple, l'installation d'un module moteur GAP 1, dans un compartiment d'aéronef ayant une forme allongée suivant un axe donné LL, délimité latéralement ainsi qu'à une extrémité suivant l'axe par une coque 2 et fermé à l'autre extrémité par une cloison 3 traversée par cet axe. La cloison 3 et la coque 2 forment la structure du compartiment à laquelle peuvent être liés des équipements.

Dans le cas d'un module GAP installé dans un cône de queue d'un avion, par exemple, l'axe LL correspond à l'axe LL du fuselage orienté vers l'arrière, la cloison 3 peut être une cloison structurelle du fuselage, la coque 2 peut comprendre les parois du fuselage après la cloison 3 avec les éléments de structure qui les maintiennent.

Comme, en général, l'axe LL est orienté de l'avant vers l'arrière (de la gauche vers la droite sur la figure 1) et que cela correspond naturellement au sens des écoulements, il est fait référence, par commodité, à l'avant et l'arrière en suivant les sens de l'axe LL indiqué sur la figure 1 dans la suite de la description. Le module moteur GAP 1 et la coque 2 se trouvent tous deux à l'arrière de la cloison 3. La direction suivant l'axe LL vers l'arrière est donc appelée direction de déport dans la suite de la description.

Le module GAP 1, très schématiquement représenté sur la figure 1, forme un module qui intègre différents équipements du turbomoteur et qui, en particulier, comporte sur sa face arrière une tuyère 4 de sortie des gaz du turbomoteur.

Le module GAP est généralement suspendu à la structure de manière isostatique par six bielles, 5a à 5f, qui assurent son positionnement selon les six degrés de liberté par rapport au compartiment. Bien que ce ne soit pas obligatoire, les six bielles maintenant le module moteur peuvent être agencées de telle façon que quatre bielles 5a - 5b - 5c - 5d soient attachées à la cloison structurelle 3 et deux bielles 5e - 5f soient attachées à la coque 2.

Un conduit d'échappement 6 recueille ces gaz d'échappement par une embouchure 7, à l'avant du conduit, qui vient recouvrir partiellement la tuyère 4 de sortie du turbomoteur. Ainsi que c'est indiqué sur la figure 1, cette embouchure 7 a une forme évasée, plus large que la tuyère 4. Idéalement, la tuyère 4 et l'embouchure 7 sont concentriques et la différence de diamètre ménage un espace annulaire d'épaisseur suffisante pour aspirer l'air du compartiment. Dans la pratique, les deux éléments peuvent ne pas être parfaitement alignés mais ils doivent laisser un passage sur toute la périphérie de la tuyère dont l'épaisseur doit rester comprise entre une valeur minimale et une valeur maximale. Le conduit 6 rejette ensuite les gaz dans l'air, à l'extérieur du compartiment. Pour cela, son extrémité arrière 8 débouche dans un orifice 9 de la coque 2.

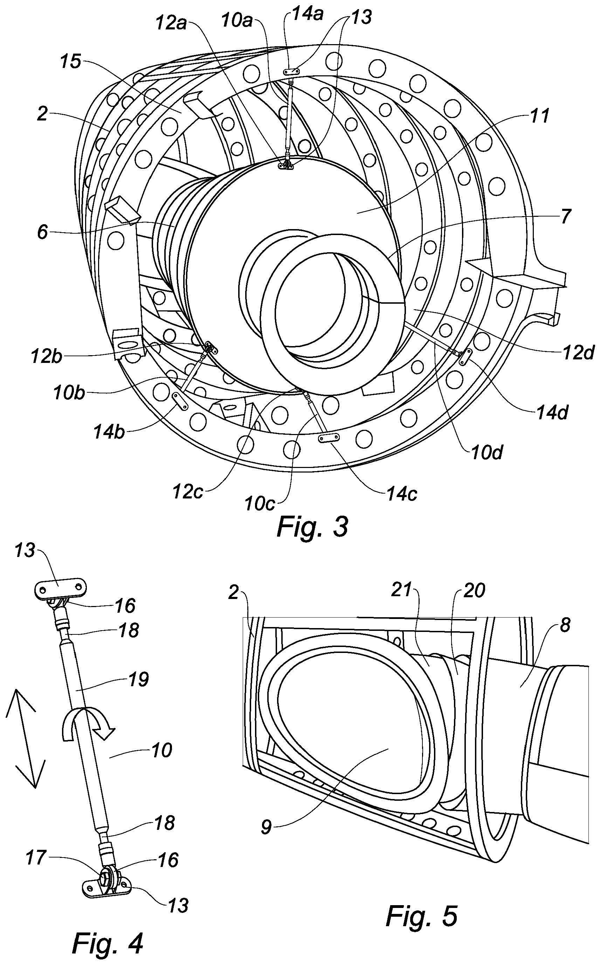

Selon un premier aspect de l'invention, le conduit d'échappement 6 est maintenu au niveau de son embouchure par quatre bielles 10a - 10b - 10c - 10d. Ainsi que c'est représenté sur la figure 3, les bielles peuvent être fixées sur une section 11 du conduit d'échappement 6, proche de l'extrémité avant et correspondant à une partie du conduit d'échappement plus large sur laquelle est fixée l'embouchure 7. Cette disposition permet de ne pas faire interférer les problèmes de tenue mécanique du conduit et de définition géométrique de l'embouchure 7 pour l'adapter à la tuyère 4.

Par ailleurs, les bielles 10a - 10b - 10c -10d sont fixées à leurs points d'attache 12a - 12b - 12c - 12d sur la section 11 par des ferrures 13 contenant des rotules, comme représenté à la figure 3. Ces points d'attache 12a- 12b - 12c - 12d sont répartis sur la périphérie de la section 11 de manière à contrôler les quatre derniers degrés de liberté du conduit d'échappement 6

Les autres extrémités des bielles 10a - 10b - 10c - 10d sont fixées à la coque 2 également part des ferrures 13 contenant des rotules. Les points d'attache 14a - 14b - 14c - 14d des bielles 10a - 10b - 10c - 10d sur la coque 2 sont répartis sur la circonférence de la paroi et mis sensiblement en regard des points d'attache 12a - 12b - 12c - 12d respectifs sur le conduit d'échappement 6. Ainsi que c'est montré sur la figure 3, bien que ce ne soit pas obligatoire, ces points d'attache 14a - 14b - 14c - 14d sont préférentiellement installés sur un cadre structurel 15 de la coque 2.

Les bielles ainsi installées forment une solution légère pour contrôler quatre degrés de libertés du conduit d'échappement au voisinage de son embouchure.

Selon un deuxième aspect de l'invention, la longueur de ces bielles est réglable. Dans l'exemple de réalisation illustré sur la figure 4, à chaque extrémité de la bielle 10, une chape 16 destinée à entourer la sphère 17 solidaire de la ferrure 13 de fixation est prolongée par une tige 18 dont l'extrémité est filetée. Le corps 19 de la bielle 10 comporte à l'extrémité correspondante un filetage en creux configuré pour coopérer avec la tige filetée 18 de la chape 16. Par ce moyen, la longueur de la bielle 10 peut être ajustée en vissant ou dévissant le corps 19 de la bielle 10 autour de la tige filetée 18 de chaque chape 16, ou de l'une d'entre elles, ainsi que c'est évoqué par les flèches sur la figure 4. Lorsque la longueur est ajustée, on peut bloquer le mouvement de la tige 18 par rapport au corps 19 de la bielle 10 de manière réversible, avec un contre écrou par exemple. Il est également possible de coller les deux parties mais il est alors nécessaire de détruire le collage si l'on veut à nouveau modifier la longueur.

Ce système permet notamment d'installer préalablement les chapes 18 de la bielle 10 dans les ferrures 13 destinées à être fixées d'un côté au conduit d'échappement 6, de l'autre à la coque 2. On peut faire varier la longueur de la bielle 10 sans désolidariser la chape 18 de la ferrure 13.

En utilisant ces bielles réglables, il est donc possible d'ajuster rapidement leur longueur de manière à ce que les ferrures 13 puissent être fixées aux points d'attache correspondants sur le conduit d'échappement 6 et sur la coque 2 pour bouger la position du conduit. On peut également utiliser des bielles proches de la longueur théorique et les adapter sur place lors du montage, sans avoir à respecter de cotes trop précises pour leur fabrication.

Selon un autre aspect de l'invention, l'orifice 9 est équipé d'un dispositif de maintien 20 de l'extrémité arrière 8 du conduit 6 qui permet au conduit 6 de coulisser et d'assurer une liaison de type rotule par rapport à l'orifice 9.

Un mode de réalisation de ce dispositif de maintien est représenté sur la figure 5. Sur cet exemple, l'orifice 9 évacue les gaz latéralement. Il est équipé d'un coude 21 qui est solidaire de la coque 2 en sortie et qui vient s'aboucher longitudinalement avec l'extrémité arrière 8 du conduit d'échappement 6. Le dispositif de liaison 20 est constitué de lamelles flexibles qui font la jonction entre l'extrémité arrière du conduit d'échappement 6 et l'entrée du coude 21.

De cette manière, le dispositif de liaison 20 bloque deux degrés de liberté du conduit d'échappement 6 correspondant aux translations de son extrémité arrière 8 dans les deux directions transversales à la direction longitudinale LL tout en permettant de coulisser dans cette direction longitudinale et d'assurer une liaison de type rotule.

Le dispositif de suspension du conduit d'échappement 6 à la coque 2, composé des quatre bielles 10a - 10b - 10c - 10d fixées à la section 11 proche de l'extrémité avant 7 et du moyen de maintien 20 de l'extrémité arrière 8 près de l'orifice 9 est donc isostatique. Il permet de contrôler la position de l'embouchure 7 du conduit d'échappement 6 tout en maintenant son extrémité aval 8 centrée sur l'orifice 9 d'évacuation des gaz.

Par ailleurs, le moyen de maintien 20 sur l'orifice peut avoir une élasticité lui permettant de conserver le contact avec le conduit d'échappement 6 au voisinage de son extrémité arrière 8 malgré de petits déplacements par rapport à la position théorique dans les deux directions transversales. Il peut également intégrer une fonction pare-feu en évitant la communication entre l'intérieur du compartiment du GAP et l'extérieur.

En référence à la figure 1, dans une configuration nominale, la coque 2 est alignée selon l'axe LL par rapport à la cloison 3 et le dispositif de suspension du module GAP 1 est configuré pour que le module GAP 1 soit parfaitement aligné selon le même axe LL. Par ailleurs, l'avant du conduit d'échappement 6 a été fixée de manière à ce que son embouchure 7 soit centrée par rapport à la coque 2. Dans ces conditions, l'embouchure 7 entoure la sortie de la tuyère 4 en laissant l'espace nécessaire pour produire l'effet Venturi. Par ailleurs, l'extrémité arrière 8 de l'échappement est correctement centrée dans l'orifice 9 et maintenue sans effort excessif par le moyen de liaison 20.

Cependant, ainsi que cela a déjà été évoqué, l'accumulation de tolérances de fabrication, sur les bielles, sur le module GAP 1, ou encore sur la coque 2, notamment dans ses liens avec le reste de la structure de l'aéronef dont la cloison structurelle 3 est solidaire, peut entraîner des défauts d'alignement. Sur l'exemple, de la figure 2, le défaut d'alignement est essentiellement dû aux écarts de fabrication de la coque 2 ou de sa liaison avec la cloison structurelle 3, ce qui fait que cette coque est désaxée par rapport à la direction LL perpendiculaire à la cloison. Cependant, l'invention peut s'appliquer à d'autre cas, par exemple si les écarts de fabrication du module GAP et/ou des bielles entraînent, au contraire, que le module soit désaxé par rapport à la direction LL. Il peut également se produire que les deux causes soient concomitantes. Dans tous les cas, le fait de recentrer le conduit d'échappement 6 comme proposé dans la présente invention permet de placer correctement la sortie de tuyère 4 dans l'embouchure 7 du conduit d'échappement 6.

En référence à la figure 2, selon un exemple de réalisation de l'invention, le module GAP 1 ayant une position déterminée ne correspondant pas à la position de l'embouchure 7 du conduit d'échappement 6 lorsqu'il et centré, on adapte la disposition des bielles 10a - 10b - 10c - 10d maintenant le conduit d'échappement 6 au niveau de l'embouchure 7 pour placer celle-ci autour de la tuyère 4.

Un exemple de procédé de montage simple de l'ensemble formé du module GAP 1 et de son conduit d'échappement 6 dans le compartiment comporte les étapes décrites ci-après. Cet exemple est décrit pour le cas où il est prévu de monter le module GAP 1 par le bas dans le compartiment en l'amenant verticalement dans son support.

Dans une étape préalable, le module GAP 1 et le conduit d'échappement 6 ont été fabriqués pour s'assembler dans le compartiment destiné à recevoir le GAP, avec les cotes théoriques de la cloison 3 et de la coque 2.

Dans une première étape, le conduit d'échappement 6 est installé dans la coque 2 en reliant son extrémité arrière 8 par le moyen de liaison 20. Par ailleurs son extrémité avant 7 est maintenue par des moyens provisoires dans une position qui se trouve ici être légèrement au-dessus de la position théorique qu'il doit occuper. De plus, une moitié inférieure de l'embouchure 7 du conduit d'échappement 6 aura été démontée, afin de permettre le passage de la tuyère 4 du module GAP 1 lors de son installation sur le dispositif de suspension

Dans une deuxième étape, le module GAP 1 est monté en utilisant le dispositif de suspension 5a - 5b - 5c - 5d - 5e - 5f à la cloison 3 et la coque 2 qui a été préalablement déterminé lors de la conception de l'ensemble. Pour réaliser cette étape, il est possible d'avoir démonté préalablement une moitié inférieure de l'embouchure 7 du conduit d'échappement 6, afin de permettre le passage de la tuyère 4 du module GAP 1 lors de son installation sur le dispositif de suspension.

Dans une troisième étape, la position de l'embouchure 7 est ajustée autour de la tuyère 4. A cette fin, une, voire plusieurs cales peuvent être installées sur le pourtour de la tuyère 4, permettant de simuler simplement le jeu que doivent respecter la tuyère 4 et l'embouchure 7. On est alors sûr que le conduit d'échappement 6 est positionné de telle sorte que le jeu nécessaire soit respecté entre la tuyère 4 et l'embouchure 7 lorsque celle-ci est placée contre la paroi extérieure de la tuyère en s'appuyant sur les cales. La liaison de type rotule entre l'extrémité arrière 8 de l'échappement 6 et le moyen de liaison 20 permet cet ajustement sans créer de contrainte sur l'échappement 8 ou le moyen de liaison 20.

Dans une quatrième étape, les quatre bielles 10a - 10b - 10c - 10d sont fixées, selon l'agencement déjà décrit en référence à la figure 3, à leurs points d'attache prévus 12a - 12b - 12c - 12d sur la section 11 du conduit d'échappement 6 et à leurs points d'attaches prévus 14a - 14b - 14c - 14d sur la coque 2, de manière à maintenir le conduit d'échappement dans la position obtenue à l'étape précédente.

Pour arriver à ce résultat, l'utilisation des bielles réglables 10 correspondant à la figure 4, permet d'ajuster leurs longueurs jusqu'à ce que les ferrures 13 liées à leurs chapes 16 arrivent en correspondance avec les moyens de boulonnage prévus sur les points d'attache 12a - 12b - 12c - 12d du conduit d'échappement 6 et sur ceux 14a - 14b - 14c - 14d de la coque 2.

Dans une dernière étape, le montage est achevé en enlevant la ou les cales qui ont servi à simuler le jeu entre la tuyère 4 et l'embouchure 7 du conduit d'échappement 6.

Il est à noter que tout démontage/remontage ultérieur du GAP ou de l'échappement ne nécessitera plus aucun réglage.

La réalisation de l'invention a été décrite en détail pour le cas d'un échappement pour un GAP installé dans un compartiment. Cependant le déposant n'entend pas se limiter à ce cas spécifique. L'homme du métier peut aisément adapter l'invention pour tout élément tubulaire dont il faut positionner une extrémité en assurant le centrage de son autre extrémité dans un élément de son support.

## Revendications

1. Installation comprenant un module moteur (1) comportant une tuyère (4) d'échappement de gaz et un ensemble comprenant une structure (2) et un conduit d'échappement (6) dont l'entrée est positionné pour recueillir les gaz d'échappement sortant de la tuyère (4), le conduit d'échappement (6) étant monté de manière isostatique dans la structure (2), ledit conduit d'échappement (6) comportant une première extrémité (7) reliée par au moins quatre bielles (10a - 10b - 10c - 10d) à ladite structure, fixant quatre premiers degrés de liberté, et une deuxième extrémité (8) reliée à ladite structure (2) par un moyen de liaison (20) fixant deux seconds degrés de liberté, lesdites bielles comportant un moyen de réglage (19, 18) de leur longueur, **caractérisée en ce que** la sortie de la tuyère (4) s'emboîte dans la première extrémité (7) du conduit en laissant un jeu avec ledit conduit sur l'ensemble de sa périphérie.

2. Installation selon la revendication précédente dans laquelle la structure (2) comporte une paroi avec un orifice (9), la deuxième extrémité (8) du conduit d'échappement (6) étant montée coulissante dans cet orifice (9).

3. Installation selon la revendication précédente dans laquelle le montage coulissant (20) entre la paroi et la deuxième extrémité (8) du conduit d'échappement (6) est flexible suivant au moins un des deux seconds degrés de liberté.

4. Installation selon l'une des revendications précédentes dans laquelle le module moteur (1) comporte un groupe auxiliaire de puissance, la paroi de la structure (2) formant au moins une partie de la paroi du compartiment contenant le groupe auxiliaire de puissance.

5. Aéronef comportant une installation selon la revendication précédente dans lequel ladite structure forme le cône de queue.

6. Procédé de montage d'un module moteur (1) comportant une tuyère (4) d'échappement de gaz et d'un conduit d'échappement (6) d'un turbomoteur dans une structure (2) de manière à positionner une première extrémité (7) dudit conduit d'échappement (6) par rapport au module moteur (1) en maintenant une deuxième extrémité (8) dudit conduit d'échappement (6) au contact de ladite structure (2) dans lequel, après avoir préalablement relié ladite deuxième extrémité (8) à ladite structure (2) par deux degrés de liberté et positionné ladite première extrémité (7) de sorte que la sortie de la tuyère (4) s'emboîte dans la première extrémité (7) du conduit en laissant un jeu avec ledit conduit sur l'ensemble de sa périphérie, on relie ladite première extrémité (6) à ladite structure (2) par quatre bielles dont on ajuste la longueur de manière à maintenir cette position, ladite première extrémité (6) étant positionnée par rapport au module moteur (1) préalablement monté dans ladite structure (2).

## Patentansprüche

1. Installation, umfassend ein Motormodul (1), das eine Gasaustrittsdüse (4) und eine Anordnung aufweist, die eine Struktur (2) und eine Austrittsleitung (6) umfasst, deren Einlass so positioniert ist, dass er die aus der Düse (4) austretenden Austrittsgase sammelt, wobei die Austrittsleitung (6) isostatisch in der Struktur (2) montiert ist, wobei die Austrittsleitung (6) ein erstes Ende (7), das durch mindestens vier Pleuel (10a-10b- 10c- 10d) mit der Struktur verbunden ist, die vier erste Freiheitsgrade fixiert, und ein zweites Ende (8), das mit der Struktur (2) durch ein Verbindungsmittel (20) verbunden ist, das zwei zweite Freiheitsgrade fixiert, aufweist, wobei die Pleuel ein Mittel zum Einstellen (19, 18) ihrer Länge aufweisen, **dadurch gekennzeichnet, dass** der Auslass der Düse (4) in das erste Ende (7) der Leitung eingreift und ein Spielraum zur Leitung über ihren gesamten Umfang lässt.

2. Installation nach dem vorstehenden Anspruch, wobei die Struktur (2) eine Wand mit einer Öffnung (9) aufweist, wobei das zweite Ende (8) der Austrittsleitung (6) in dieser Öffnung (9) verschiebbar montiert ist.

3. Installation nach dem vorstehenden Anspruch, wobei die verschiebbare Montage (20) zwischen der Wand und dem zweiten Ende (8) der Austrittsleitung (6) gemäß mindestens einem der beiden zweiten Freiheitsgrade flexibel ist.

4. Installation nach einem der vorstehenden Ansprüche, wobei das Motormodul (1) ein Hilfstriebwerk aufweist, wobei die Wand der Struktur (2) mindestens einen Teil der Wand des Bereichs, der das Hilfstriebwerk enthält, bildet.

5. Luftfahrzeug, das eine Installation nach dem vorstehenden Anspruch aufweist, wobei die Struktur den Heckkonus bildet.

6. Verfahren zur Montage eines Motormoduls (1), das eine Gasaustrittsdüse (4) und eine Austrittsleitung (6) eines Turbomotors in einer Struktur (2) aufweist, um ein erstes Ende (7) der Austrittsleitung (6) in Bezug auf das Motormodul (1) zu positionieren, indem ein zweites Ende (8) der Austrittsleitung (6) in Kontakt mit der Struktur (2) gehalten wird, wobei, nachdem das zweite Ende (8) zuvor mit der Struktur (2) durch zwei Freiheitsgrade verbunden und das erste Ende (7) so positioniert wurde, dass der Auslass der Düse (4) in das erste Ende (7) der Leitung eingreift und einen Spielraum zur Leitung über ihren gesamten Umfang lässt, das erste Ende (6) mit der Struktur (2) durch vier Pleuel verbunden ist, deren Länge so eingestellt wird, dass diese Position gehalten wird, wobei das erste Ende (6) in Bezug auf das zuvor in der Struktur (2) montierte Motormodul (1) positioniert ist.

## Claims

1. Installation comprising an engine module (1) comprising a gas exhaust nozzle (4) and an assembly comprising a structure (2) and an exhaust pipe (6) of which the inlet is positioned to collect the exhaust gases leaving the nozzle (4), the exhaust pipe (6) being mounted isostatically in the structure (2), said exhaust pipe (6) comprising a first end (7) connected to said structure by at least four connecting rods (10a - 10b - 10c - 10d), thus setting four first degrees of freedom, and a second end (8) connected to said structure (2) by an attachment means (20) that sets two second degrees of freedom, said connecting rods comprising a means (19, 18) for adjusting the length thereof, **characterized in that** the outlet of the nozzle (4) fits into the first end (7) of the pipe, while leaving play relative to said pipe over the entirety of its periphery.

2. Installation according to the preceding claim, wherein the structure (2) comprises a wall comprising an opening (9), the second end (8) of the exhaust pipe (6) being slidingly mounted in this opening (9).

3. Installation according to the preceding claim, wherein the sliding mounting (20) between the wall and the second end (8) of the exhaust pipe (6) is flexible in accordance with at least one of the two second degrees of freedom.

4. Installation according to any of the preceding claims, wherein the engine module (1) comprises an auxiliary power unit, the wall of the structure (2) forming at least part of the wall of the compartment containing the auxiliary power unit.

5. Aircraft comprising an installation according to the preceding claim, wherein said structure forms the tail cone.

6. Method for mounting an engine module (1) comprising a gas exhaust nozzle (4) and an exhaust pipe (6) of a turboshaft engine in a structure (2) so as to position a first end (7) of said exhaust pipe (6) relative to the engine module (1) while keeping a second end (8) of said exhaust pipe (6) in contact with said structure (2), wherein, after having previously connected said second end (8) to said structure (2) by two degrees of freedom and having positioned said first end (7) so that the outlet of the nozzle (4) fits into the first end (7) of the pipe, while leaving play relative to said pipe over the entirety of its periphery, said first end (6) is connected to said structure (2) by four connecting rods of which the length is adjusted so as to maintain this position, said first end (6) being positioned relative to the engine module (1) that has been previously mounted in said structure (2).
